# EUROPÄISCHE PATENTSCHRIFT

(11) **EP 2 090 386 B1**
(45) Veröffentlichungstag und Bekanntmachung des Hinweises auf die Patenterteilung: **14.07.2010**
(21) Anmeldenummer: 09162152.4
(22) Anmeldetag: 21.12.2004
(51) Int. Cl.: B21J 15/10, B23P 19/04, B23Q 1/01

(54) **Montageeinrichtung zum verbinden von Schalenförmigen Längssegmenten eines Mantelkörpers durch anbringen wenigstens einer Längs-Verbindungsnaht**
Device for connecting cup-shaped longitudinal segments of a covering body by placing at least one longitudinal connecting joint
Dispositif d'assemblage de segments longitudinaux en forme de cuvette, d'un corps d'enveloppe, par application d'au moins un cordon de liaison longitudinal

(30) Priorität: 30.12.2003 DE 10361594
(43) Veröffentlichungstag der Anmeldung: 19.08.2009
(62) Teilanmeldung aus: 04820953.0
(73) Patentinhaber: Airbus Operations GmbH, 21129 Hamburg (DE)
(72) Erfinder: Wesseloh, Reiner, 21224, Rosengarten - Klecken (DE)
(74) Vertreter: Kopf, Korbinian Paul

(56) Entgegenhaltungen:
- EP-A- 0 483 947
- WO-A-99/37429

## Beschreibung

Die Erfindung betrifft eine Montageeinrichtung zum Verbinden von schalenförmigen Mantel-Längssegmenten eines ein Großbauteil bildenden, sich lang erstreckenden, einen Hohlraum mit offener Stirnseite bestimmenden, insbesondere umfangsseitig geschlossenen Mantelkörpers durch Anbringen wenigstens einer Längs-Verbindungsnaht am Körpermantel, umfassend wenigstens ein Werkzeugpaar, das ein in Längsrichtung des Mantelkörpers innerhalb des Hohlraums verfahrbar geführtes inneres Werkzeug sowie ein in Längsrichtung des Mantelkörpers außerhalb des Hohlraums verfahrbar geführtes äußeres Werkzeug aufweist, wobei die Werkzeuge im Paar in Richtung quer zur Körperlängsrichtung zum Herstellen der Verbindungsnaht zusammenwirken. Typischerweise handelt es sich bei den Mantelkörpern um Flugzeugrümpfe, die aus einer Mehrzahl von teil-zylindrischen vorgefertigten Schalensegmenten montiert werden. Die Segmente werden in den Rumpf bestimmende Positionen gesetzt und mit Nietnähten längsweise aneinander gefügt. Zur Herstellung der Nietnähte kommt eine Gruppe von Werkzeugen zum Einsatz, die an verfahrbaren Werkzeugeinheiten angeordnet sind. Solche Einheiten umfassen zum Beispiel Bohr-, Senk-, Dichtungs-, Steck-, Preß- und Gegenhaltewerkzeuge. Allgemein kann die Einrichtung mit beliebigen Werkzeugen zum Herstellen von Verbindungsnähten oder zum Bearbeiten von entsprechenden Verbindungsstellen ausgestattet werden.

Eine zum Beispiel aus US 4 662 556 bekannte gattungsgemäße automatische Montageeinrichtung umfaßt Werkzeugeinheiten tragende Gestellwagen, die auf Schienen in Rumpf-Längsrichtung verfahrbar angeordnet sind. Mit der stationären Gestellwagen-Einrichtung lassen sich Nietnähte im wesentlichen nur in einer Umfangs-Höhenposition setzen, so daß der zu fertigende Rumpfkörper verlagert werden muß, um ihn mit weiteren Segmenten zu vervollständigen. Eine andere aus US 4 662 556 bekannte, Nietverbindungen herstellende Montageeinrichtung weist ein entsprechend der Umfangskontur des Rumpfes geformtes Schienengerüst auf. An bogenförmigen Schienenabschnitten laufen Wagen, die einen ein Außenwerkzeug tragenden, über die Rumpflänge sich erstreckenden Balken führen und verfahren. Zum Bearbeiten einer Nietnaht in einer Umfangs-Höhenposition wird der Längsbalken am Rumpf befestigt, und Niet-Gegenwerkzeuge im Rumpfinneren werden über durch die Rumpfschale gesetzte Stifte mit dem Längsbalken verbunden. In das zu fertigende Bauteil werden unerwünscht Kräfte eingeleitet. Zwar können mit der Montageeinrichtung Längs-Nietnähte an unterschiedlichen Umfangspositionen eines Halb-Rumpfes hergestellt werden, jedoch sind Rüsten und Umrüsten besonders zeit- und arbeitsaufwenig. Die gebogene Schienenführung ist in Abhängigkeit von Dimension und Form des herzustellenden Flugzeugrumpfes zu konstruieren, so daß die Einrichtung nur für einen einzigen Bautyp errichtet und genutzt werden kann. Die Gesamtkonstruktion ist aufwendig und erlaubt nur die Erfassung eines halben Rumpfumfangs.

WO 99/37429 A beschreibt eine Montageeinrichtung gemäss Oberbegriff des Anspruchs1, sowie allgemein die Positionierung von Werkzeugen in Bezug auf ein Werkstück und insbesondere eine Vorrichtung zur Positionierung von Werkzeugen zu einem bogenförmigen Werkstück.

EP 0 483 947 A beschreibt ein Verfahren und eine Vorrichtung zur Positionierung von Werkzeugen in Bezug zu einem bogenförmigen Werkstück. Das Gerät umfasst axial voneinander beabstandete Haltearm-Baugruppen auf, die um eine Mittellinie des bogenförmigen Werkstücks verschwenkbar sind.

Der Erfindung liegen die Ziele zugrunde, eine automatische Montageeinrichtung der beschriebenen Art zu schaffen, die relativ einfach bauen und zum Herstellen von längssegmentierten Mantelkörpern unterschiedlicher Durchmesser bzw. Formen einsetzbar sein soll, wobei Längs-Verbindungsnähte in möglichst großem Umfangswinkelbereich am Körpermantel in gewünschter Umfangsposition bearbeitet und hergestellt werden sollen. Rüst- und Montageaufwand sollen verringert und entsprechend Zeit- und Kostenaufwand der Herstellung reduziert werden.

Die Ziele der Erfindung werden in Verbindung mit den Merkmalen der eingangs genannten Montageeinrichtung dadurch erreicht, daß die Montageeinrichtung ein Trägerpaar umfaßt, das durch einen im Hohlraum des Mantelkörpers sich in Längsrichtung erstreckenden, das innere Werkzeug verfahrbar führenden inneren Führungsträger sowie durch einen außerhalb des Mantelkörpers sich in Längsrichtung erstreckenden, das äußere Werkzeug verfahrbar führenden äußeren Führungsträger gebildet ist, wobei jeder Führungsträger um wenigstens eine nach Maßgabe äußerer Längskontur des Mantelkörpers orientierte Längs-Drehachse rotatorisch sowie in wenigstens zwei separate, quer zur Längsrichtung verlaufende Raumrichtungen verschiebbar derart gelagert und feststellbar ist, daß zum Herstellen der Verbindungsnaht zusammenwirkende Werkzeuge im Paar wahlweise unterschiedliche Positionen am Längsumfang des Mantelkörpers einnehmen. Erfindungsgemäß sind die im Paar gegeneinander arbeitenden Werkzeuge durch Drehung um zugehörige Längsachse sowie durch voneinander unabhängige Verschiebungen in wenigstens zwei Richtungen quer zur Körper-Längsachse in gewünschte Umfangsposition am Mantel des herzustellenden Körper verfahrbar. Durch Drehverstellung der Werkzeug-Führungsträger lassen sich die Werkzeuge in der gewünschten Höhen-/Umfangsposition mit ihren Arbeitsachsen auf den Bereich zu verbindender Mantelsegmente ausrichten, wobei zumeist eine 90°-Ausrichtung vorgesehen wird. Insbesondere arbeiten Nietwerkzeuge in Arbeitsausrichtung mit 90°-Winkel zur Mantelfläche an der Nahtstelle. Die erfindungsgemäße Einrichtung ist für diese Anwendung besonders geeignet, da die Umfangs-/Höhenpositionen translatorisch und die Arbeitswinkelpositionen rotatorisch ohne gegenseitige Beeinflussung einrichtbar sind. Man erkennt, daß die Einrichtung universell zum Herstellen von Mantel-Hohlkörpern unterschiedlichster Größen und Querschnittsformen einsetzbar ist, da sich das Werkzeugpaar oder die Werkzeugpaare praktisch in jede beliebige Höhen- und Umfangsposition bewegen lassen. Insbesondere läßt sich ein und dieselbe Montageeinrichtung zum Herstellen von Rümpfen unterschiedlicher Flugzeugtypen vorsehen. Für jeden Größen- und/oder Formtyp zu konstruierende Einrichtungen entfallen. Maschinenkosten, Rüst- und Montagekosten sowie Fertigungszeiten werden erheblich reduziert. Zudem läßt sich der Automatisierungsgrad zur Herstellung von Hohl-Mantelkörpern mit Segmentteilen erhöhen, da Verbindungsnähte mit freien Werkzeugen auf ein und dieselbe Weise hergestellt werden. Herkömmliche manuelle Einrichtungs- und Montagearbeiten entfallen.

Gemäß der Erfindung ist jeder Werkzeug-Führungsträger rotatorisch um zugehörige Längs-Drehachse sowie translatorisch in zwei separate, senkrecht zueinander stehende transversale Richtungen verlagerbar. So lassen sich die Werkzeuge Richtung für Richtung in Y- und Z-Richtung eines kartesischen Koordinatensystems in gewünschte Höhen- und Umfangsposition bringen und durch Drehverstellung zum Ausrichten ihrer Arbeitsachsen präzise zur Fläche der zu verbindenden Mantelsegmente einstellen.

Die erfindungsgemäße Einrichtung läßt sich besonders vorteilhaft zum Herstellen von Körpern einsetzen, deren Längssegmente teil-zylindrisch sind. Auch Mantel-Hohlkörper mit vom Zylinderquerschnitt abweichendem Querschnitt lassen sich ohne weiteres fertigen. Insbesondere können auch Körper mit sich änderndem Profilquerschnitt, insbesondere mit konischen Längsabschnitten hergestellt werden. Zu diesem Zweck werden die Werkzeug-Führungsträger so gelagert, daß sie um Längs-Drehachsen drehbar sind, die entsprechend unterschiedlichen äußeren Längskonturen des Mantelkörpers orientiert sind.

Gemäß der Erfindung umfaßt die Montageeinrichtung einen sich in Längsrichtung erstreckenden Trägerrahmen, der das Trägerpaar bildet und um eine vorzugsweise mit einer Symmetrie-Längsachse des Trägerrahmens zusammenfallende Lagerachse rotatorisch gelagert ist, die eine gemeinsame Längs-Drehachse für die beiden Werkzeug-Führungsträger bildet. -Ein besonderer Vorteil dieser Ausgestaltung besteht darin, daß der innere Werkzeug-Führungsträger und der äußere Werkzeug-Führungsträger mechanisch in einen einzigen Körper, nämlich den Trägerrahmen integriert sind. Zweckmäßig ist der Trägerrahmen geschlossen, um Kraftleitung und -verteilung zu optimieren. Man erhält dadurch ein in sich kraftschlüssiges Werkzeug-Arbeitssystem, in dem die im Paar gegeneinander arbeitenden Werkzeuge mit optimalem Kräfteausgleich gegeneinander abgestützt sind. Einerseits können Werkzeuge mit relativ hohen Kräften beaufschlagt werden. Dies ist von besonderem Vorteil beim Einsatz von Quetschwerkzeugen, die Duralniete od. dgl. Niete fügen, um Krafteinleitung in zu verbindende Bauteile zu vermeiden. Insoweit haben Duralniete auch den Vorteil, daß sie kostengünstig zur Verfügung stehen, keine Paßbohrungen benötigt werden und die Toleranz des Toolcenterpoints relativ groß ist. Damit lassen sich bei der Herstellung hohe Nietraten erreichen. Andererseits lassen sich Bauteile wie der Trägerrahmen, ihn haltende Lager, Gestellteile und/oder Werkzeugträgerköpfe geringer dimensionieren. Dadurch, daß die Werkzeug-Führungsträger in den Trägerrahmen integriert sind, ist auch die Gesamtkonstruktion relativ einfach. Ein den Trägerrahmen lagerndes Gestell sowie die Lagerung sind raumsparend mit minimaler Anzahl von Bauteilen angeordnet.

Insbesondere lassen sich mit der erfindungsgemäßen Einrichtung Verbindungsnähte an umfangsseitig vollständig geschlossenen Mantelkörpern anbringen. Dies gelingt in erfindungsgemäßer Ausgestaltung auch mit geschlossenem Trägerrahmen. Ein solcher Trägerrahmen weist in erfindungsgemäßer Ausgestaltung an seinen stirnseitigen Enden die beiden Führungsträger verbindende Rahmenstege auf, die um wenigstens eine Längsachse des Trägerrahmens drehbar gelagert sind, und an wenigstens einem Rahmenende ist der Rahmensteg lösbar mit den Rahmen-Führungsträgern verbunden, so daß er im gelösten Zustand in eine stirnseitigen Raum vor dem inneren Führungsträger freigebende Position bewegbar ist. Zweckmäßig kann der Trägerrahmen dadurch geöff net werden, daß der lösbare Rahmensteg vollständig von dem Rahmen abtrennbar und mittels eines säulenartigen Gestellteils in eine Position verfahrbar ist, die freien Raum beläßt, um den stirnseitig offenen und umfangsseitig geschlossenen Mantelkörper in vorgefertigter Form oder einen Teil desselben von einer Stirnseite her in die Vorrichtung zu bringen bzw. dieser dort zu entnehmen. Zweckmäßig wird der Trägerrahmen an seinem geschlossen bleibenden stirnseitigen Ende mit einer Gewichtsmasse versehen, die ein Ausgleichsgewicht erzeugt, um den Trägerrahmen im Zustand des vollständig von den Rahmenführungsträgen abgetrennten Rahmensteges in Position zu halten.

Um eine Längsnaht auch an im Profilquerschnitt sich ändernden Mantelkörpern anbringen zu können, sieht die Erfindung zweckmäßig vor, daß der Trägerrahmen derart gelagert ist, daß er wahlweise in wenigstens zwei Positionen versetzbar ist, in denen die Rahmenführungsträger jeweils entsprechend unterschiedlicher äußere Längskontur des Mantelkörpers ausgerichtet sind. Vorteilhaft wird eine den Trägerrahmen lagernde Lagereinrichtung vorgesehen, die an den Rahmenstegen in deren Erstreckungsrichtung gekrümmt ausgebildete, z. B. konvexe Lagerabschnitte sowie diese aufnehmende korrespondierende, z. B. konkave Lagerabschnitte aufweist.

Um hinsichtlich Bauform und -größe eine besonders günstige Einrichtung mit die Werkzeug-Führungsträger integrierendem Trägerrahmen zu schaffen, werden in erfindungsgemäßer Ausgestaltung zwei säulenartige Gestellteile vorgesehen, zwischen denen der Trägerrahmen angeordnet und an denen er um eine Längsachse drehbar gelagert ist. Die säulenartigen Gestellteile sind in wenigstens einer ersten Raumrichtung quer zur Längsrichtung des Mantelkörpers insbesondere auf Schienen gemeinsam verfahrbar angeordnet. Um den Rahmenträger besonders einfach höhenverstellbar zu lagern, sieht eine Ausführungsform der Erfindung vor, daß die säulenartigen Gestellteile Lager tragen, die den Rahmenträger lagern und in Raumrichtung quer zur Längsrichtung des Mantelkörpers in der Säulenhöhe der Gestellteile verstellbar sind.

Unteransprüche sind auf die genannten und noch andere zweckmäßige und vorteilhafte Ausgestaltungen der Erfindung gerichtet. Besonders zweckmäßige und vorteilhafte Ausbildungsformen oder -möglichkeiten der Erfindung werden anhand der folgenden Beschreibung der in der schematischen Zeichnung dargestellten Ausführungsbeispiele näher beschrieben. Es zeigen
- Fig. 1 und 2: in Längsansicht ein Ausführungsbeispiel einer erfindungsgemäßen Montageeinrichtung mit Rahmenträ- ger,
- Fig. 3: in Draufsicht eine Rüstposition der Montageeinrichtung der Fig. 1 und 2,
- Fig. 4 und 5: in Längs- bzw. Draufsicht die Montageeinrichtung der Fig. 1 bis 3 in einer Einstellposition,
- Fig. 6A bis 6C: in Stirnansicht Einstellpositionen der Montageeinrichtung der Fig. 1 bis 5,
- Fig. 7: in Profilansicht Werkzeug-Einstellpositionen erfindungs- gemäßer Montageeinrichtungen am Umfang unterschiedli- cher Mantel-Hohlkörper,
- Fig. 8 und 9: in Längsansicht und Draufsicht eine nicht beanspruchte Montageeinrichtung,
- Fig. 10 und 11: in Längsansicht und Draufsicht eine Rüstposition der Montageeinrichtung der Fig. 8 und 9,
- Fig. 12A bis 12 C: in Stirnansicht Einstellpositionen der Montageeinrichtung der Fig. 8 bis 11 und
- Fig. 13: in Längsansicht eine Einstellposition der Montageeinrich- tung der Fig. 8 bis 12.

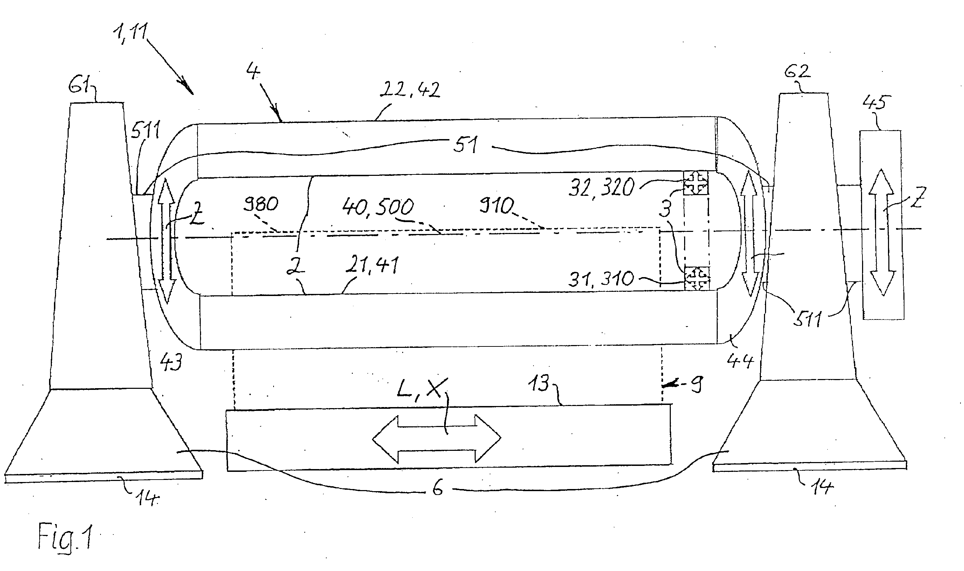

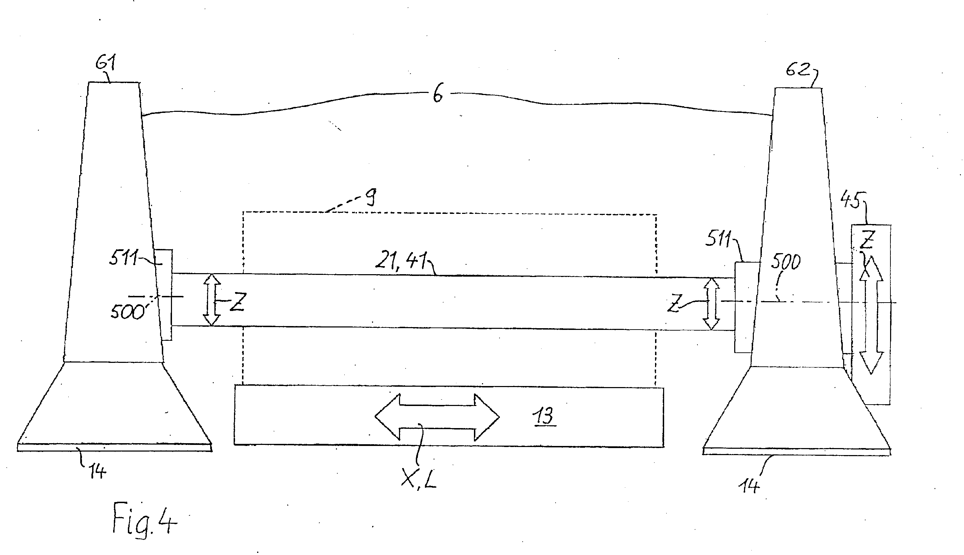

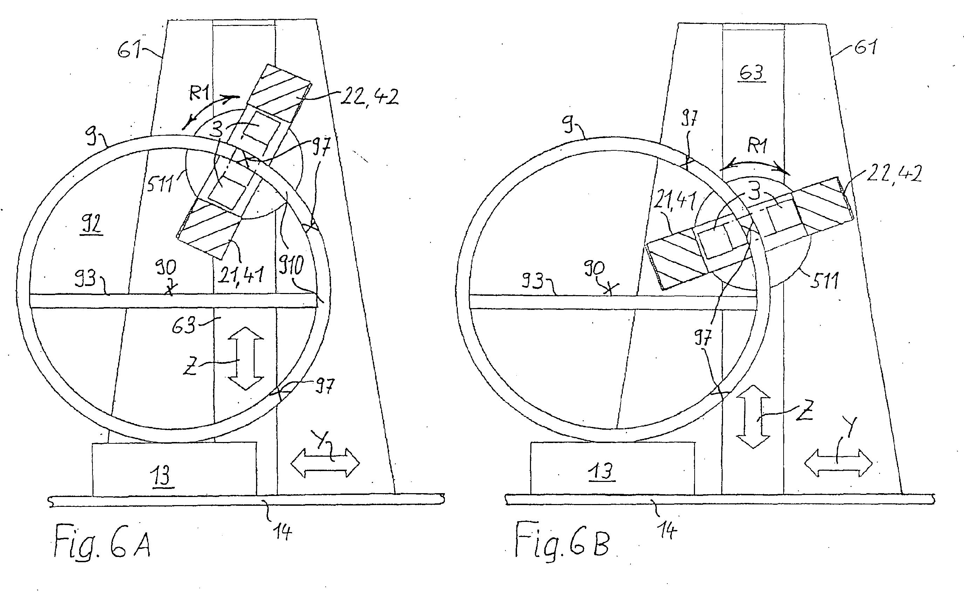

Eine anhand der Fig. 1 bis 6 dargestellte erfindungsgemäße Montageeinrichtung 1, 11 umfaßt ein Gestell 6 mit einem daran gelagerten Werkzeug-Rahmenträger 4. Zwei in Y-Richtung auf Schienen 14 wahlweise separat und gemeinsam verfahrbare Gestellteile sind als in Höhenrichtung Z sich erstreckende Säulen oder Türme 61, 62 ausgebildet. Der Trägerrahmen 4 erstreckt sich in Richtung der dritten kartesischen Koordinate X und ist über Rahmenstege bildende Endstücke 43, 44 in Höhenrichtung Z verschiebbar sowie um eine Mitten- und Symmetrieachse 40 des Rahmenträgers rotatorisch mittels Lagereinrichtung 51 an den Türmen 61, 62 gelagert. Die Montageeinrichtung 11 dient dazu, teil-zylindrische, schalenförmige Längssegmente 910 durch Anbringen von Längs-Nietnähten 97 zu einem umfangsseitig geschlossenen Mantelkörper mit offenen Stirnseiten in Form eines Rumpfes 9 zusammenzufügen, wie dies aus Fig. 6A bis 6C deutlich wird. Dort ist der Rumpf 9 eines Flugzeuges mit kreiszylindrischem Profilquerschnitt ersichtlich. Der Rumpf 9 wird im inneren auf etwa halber Höhe durch einen horizontalen Boden 93 in Oberflur und Unterflur unterteilt. Der Rumpf 9 erstreckt sich mit seiner Zylinderachse 90 in X-Richtung. Die Längsrichtung L der Montageeinrichtung 11 sowie die Längsrichtung des Rumpfes 9 sind gemeinsam durch die X-Richtung bestimmt.

Zur Montage des Rumpfes 9 wird dieser in der in Fig. 6A bis 6C dargestellten Form vorgefertigt und auf einem Bauteilwagen 13, der zum Beispiel längs einer Führung 17 in X-Richtung verfahrbar ist, in noch näher beschriebener Weise in die Montageeinrichtung 11 eingebracht. In diesem Zustand sind Längssegmente 910 - in Fig. 6A bis 6C sind Seitensektionen dargestellt - an ihren Längsrändern überlappend aneinandergeklebt. Um diese Längsverbindung zu vervollkommnen, werden an den Überlappungsstellen die Längs-Nietnähte 97 hergestellt. Solche Nietnähte werden durch paarweise gegeneinander arbeitende, quer zur Körperlängsrichtung L bewegbare Innenwerkzeuge 31 und Außenwerkzeuge 32 in an sich bekannter Weise erzeugt. Arbeits- oder Werkzeugeinheiten umfassen insbesondere Bohr-, Senk-, Dichtungs-, Steck-, Preß- und Gegenhalte-Werkzeuge, die zum Ausführen der einzelnen Arbeitsschritte automatisch selektiert, verfahren und aktiviert werden. Zum Beispiel besteht jede in Fig. 6A bis 6C an der Überlappungsstelle der Segmente 910 mit X schematisch dargestellte Nietverbindung aus drei längsparallelen Nietlinien.

Erfindungsgemäß umfaßt die Montageeinrichtung 11 ein Trägerpaar 2, das durch einen im Hohlraum 92 des Rumpfes 9 sich in X-Richtung erstreckenden, einen Innenwerkzeugwagen 310 verfahrbar führenden inneren Führungsträger 21 sowie durch einen außerhalb des Rumpfes 9 sich in X-Richtung erstreckenden, einen Außenwerkzeugwagen 320 verfahrbar führenden äußeren Führungsträger 22 gebildet ist. Im Ausführungsbeispiel der Fig. 1 bis 6 wird das Trägerpaar 2 durch den Trägerrahmen 4 gebildet. Mit gerader Längskontur 980 des Rumpfes 9 parallele Längsteile 41, 42 des Rahmens 4 bilden die beiden Führungsträger 21, 22, die an ihren stirnseitigen Enden mit den Endsticken 43, 44 kraftschlüssig verbunden sind. Der Rahmen 4 bzw. die Rahmen-Führungsträger 41, 42 sind so lang ausgebildet, daß der Längsweg jedes Werkzeugwagens 310, 320 die volle Länge des zu bearbeitenden Rumpfes 9 erfaßt. Zudem sind die Werkzeugwagen 310, 320 im Paar gegeneinander verfahrbar angeordnet, so daß eine Mehrzahl von Werkzeugen 31, 32 zum Herstellen der Nietnaht 97 von innen bzw. außen an die Mantelwand 91 des Rumpfes 9 heran verfahrbar sind, um dort zum Bearbeiten der Naht mit automatisch selektierten Werkzeugen gegeneinander zu arbeiten. Zu diesem Zweck sind einzelne Werkzeuge 31, 32 lokal auch auf den Werkzeugwagen 310. 320 längs- und querverfahrbar.

Die Rahmen-Lagereinrichtung 51 umfaßt ein Paar von Drehkranz-Lagem 511. Jedes Lager 511 ist am zugehörigen Turm 61, 62 in einer Vertikalnut 63 in Z-Richtung höhenverstellbar und festsetzbar. Um den Trägerrahmen 4 mit den Endstücken 43, 44 zu lagern, werden die beiden Drehkranz-Lager 511 in Z-(Höhen-)Richtung und Y-Richtung in übereinstimmende Positionen gebracht. In jeder Y, Z-Position ist der Rahmen 4 um seine mit der Drehachse 500 der Lagereinrichtung 51 zusammenfallende Mitten-Längsachse 40 drehbar. Entsprechend sind der innere Werkzeug-Führungsträger 21. 41 und der äußere Werkzeug-Führungsträger 22, 42 rotatorisch um ein und dieselbe Längs-Drehachse 500 gelagert. Durch Drehung des Rahmens 4 um die Drehachse 500 sind gegenüberliegende, aufeinander ausgerichtete Werkzeugwagen 310, 320 bzw. im Paar 3 gegenüberliegende Werkzeuge 31, 32 jeweils durch eine einzige Dreh-Verstellbewegung in jede beliebige Drehwinkelposition verfahrbar. In Kombination mit der gemeinsamen Verfahrbarkeit der Türme 61, 62 des Gestells 6 in Y-Richtung sowie der gemeinsamen Höhen-Verfahrbarkeit der Drehkranz-Lager 511 in Z-Richtung ist erreicht, wie dies insbesondere aus Fig. 6A bis 6C ersichtlich ist, daß der Rahmen 4 in jede gewünschte Höhen- bzw. Umfangsposition am Rumpfmantel 91 gebracht werden kann, wobei durch Drehverstellung des Rahmens 4 in Richtung R1 die Werkzeugwagen 310, 320 bzw. deren Werkzeuge 31, 32 in zur Mantelfläche des Rumpfes 9 senkrecht gerichtete Arbeitsrichtung verstellbar sind. Diese Positionierung wird durch die in Y-Richtung, Z-Richtung sowie R1-Richtung eingerichteten separaten, selbstständigen Verstellwege erzielt. Die beiden translatorischen Bewegungen sowie die rotatorische Bewegung werden in der Einrichtung 1 durch automatische Steuerung nach Maßgabe der Größe und Form des Rumpfes 9 sowie des Umfangsorts der anzubringenden Nietnaht vollzogen. In jeder eingestellten Werkzeug-Arbeitsposition werden die Türme 61, 62 bzw. die Lager 511 mit üblichen, nicht dargestellten Mitteln arretiert.

In Fig. 6A bis 6C sind zwei Arbeitspositionen im Oberflur und eine Arbeitsposition im Unterflur des Rumpfes 9 dargestellt. Jeweils wird eine Niet-Verbindungsnaht 9 erzeugt, indem die beiden Werkzeugwagen 310, 320 in den fest eingestellten Positionen der Werkzeug-Führungsträger 41, 42 längs dieser im Paar hin und hergefahren werden, wobei die einzelnen Bearbeitungsvorgänge der paarweise gegeneinander geführten Werkzeuge 31, 32 automatisch gesteuert selektiert, aktiviert und ausgeführt werden.

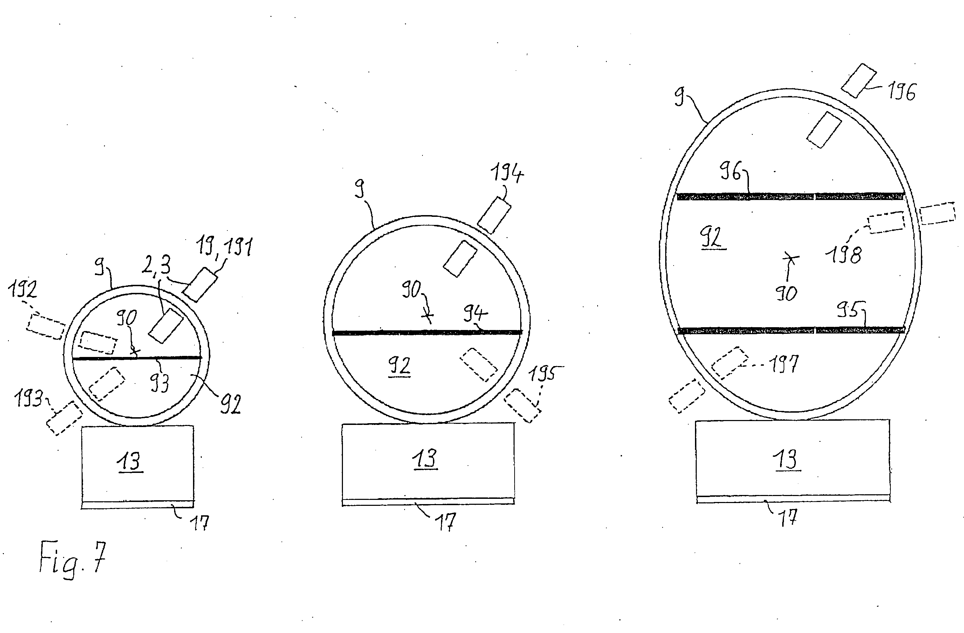

Zur Veranschaulichung universeller Verwendbarkeit der Montageeinrichtung 1 sind in Fig. 7 zylindrische Rümpfe 9 unterschiedlicher Größe und Form mit in wahlweise Bearbeitungspositionen 191 bis 198 gebrachten Führungsträgerpaaren 2 bzw. Werkzeugpaaren 3 dargestellt. Man erkennt, daß sich die Bearbeitungspositionen mit 90°-Werkzeugstellungen zum Beispiel an Rumpfkörpern mit Kreisquerschnitt unterschiedlichster Größe und an im Querschnitt oval-förmigen Mantelkörpern mit ein und derselben Montageeinrichtung 1 einrichten lassen. Zum Beispiel weisen kleinere Rümpfe Durchmesser von unter 4 m und größere Rümpfe Durchmesser von über 7 m auf. Es wird erreicht, daß mit dem erfindungsgemäßen Nietautomat zylindrische Bauteile sowie aber auch von der Zylinderform abweichende Mantelkörper jedes Durchmessers und jeder Form mit Längsnaht an gewünschter Umfangsstelle versehen werden können.

Um ein und dieselbe erfindungsgemäße Montageeinrichtung 1 für ein breites Anwendungsspektrum vorzusehen, wird man die automatisch bewegbaren und verstellbaren Teile der Einrichtung so gestalten und auslegen, daß das Paar 2 der Führungsträger 21, 22 längs eines Mantelumfangsabschnittes versetzbar ist, der einem Umfangswinkel von wenigstens 200° bis 300° entspricht.

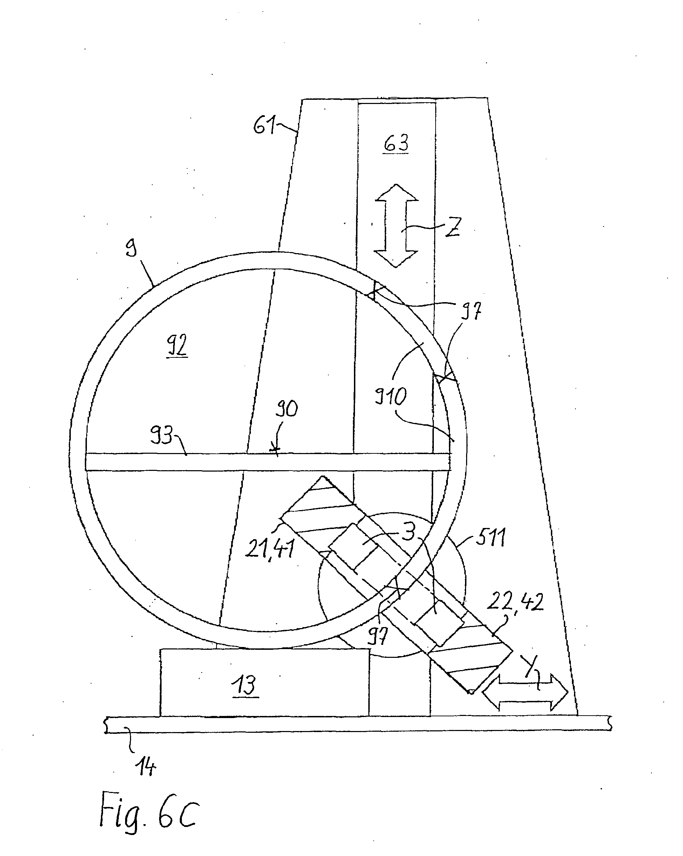

Die in Fig. 6 und 7 dargestellten Rümpfe weisen den mittleren Boden 93 bzw. im Ausführungsbeispiel des Oval-Rumpfes zwei Böden 95, 96 auf. Um die Führungsträger-Paare 2 bzw. die Werkzeugpaare 3 an solchen Rümpfen 9 in jedem Flurbereich in die gewünschte Höhenposition bringen zu können, ist ein Ebenenwechsel vorzunehmen. Zu diesem Zweck muß der Rumpf 9 aus dem Bereich des Trägerpaares 2 bzw. des Rahmens 4 herausgefahren und in den neuen Flurbereich nach Änderung der Höhenposition des Trägerpaares 2 hineingeführt werden. Dazu erforderliche Maßnahmen, die gleichermaßen vorgesehen werden, um den umfangsseitig vollständig geschlossenen, stirnseitig offenen Rumpf 9 in die Einrichtung 11 hineinzubringen, werden nachstehend im Ausführungsbeispiel beschrieben.

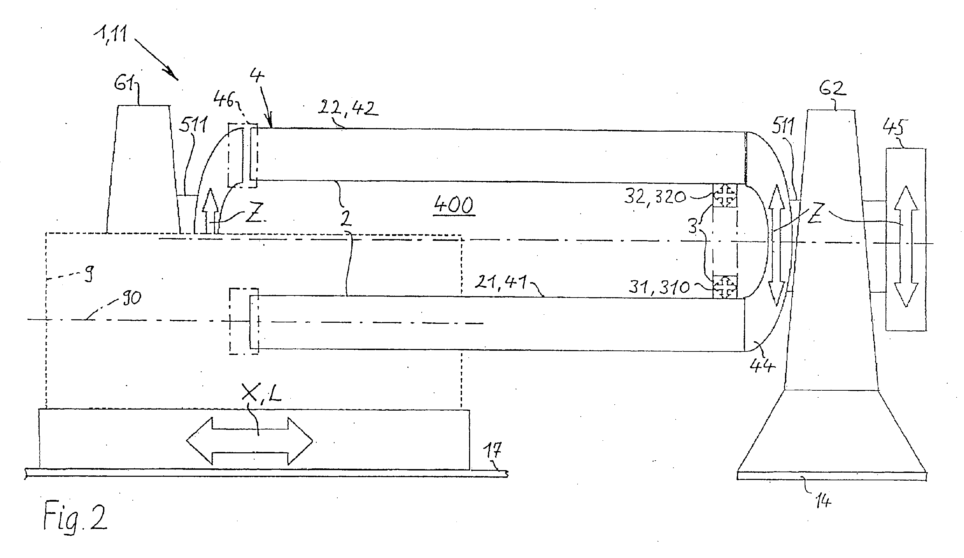

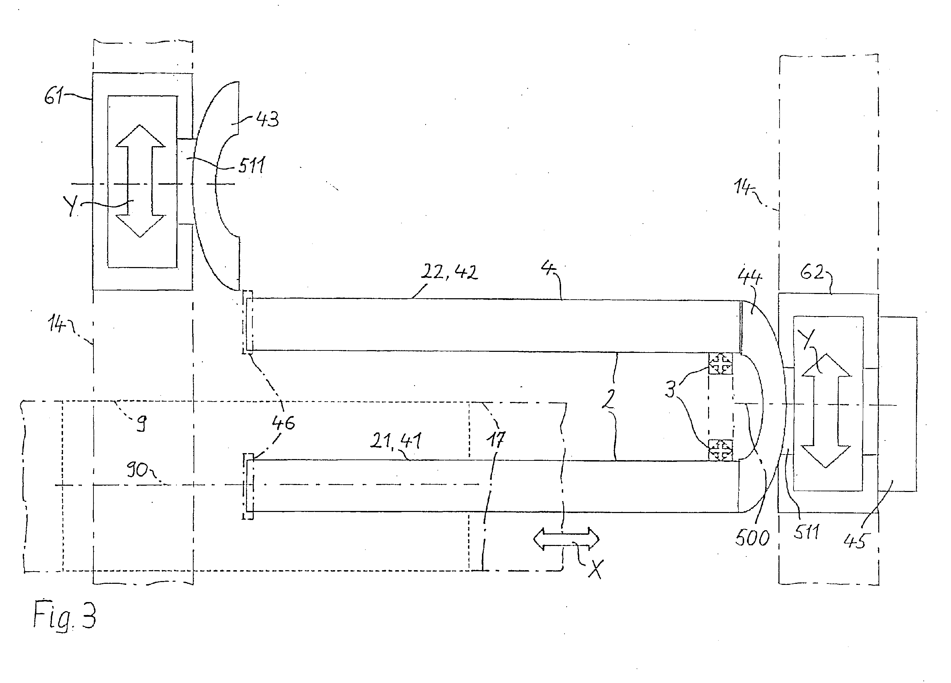

Wie aus Fig. 2 und 3 ersichtlich, ist das Rahmenendstück 43 lösbar an den Rahmen-Führungsträgem 41, 42 angebracht. Das von den Führungsträgem 41, 42 abgekoppelte Endstück 43 wird mittels des Turmes 61 in Y-Richtung verfahren, wobei das Endstück 43 mit dem Lager 511 verbunden bleibt. Zur Befestigung des Endstückes 43 an den Rahmen-Führungssträgern 41, 42 kommt jedes eine kraftschlüssige Verbindung herstellende, lösbare mechanische Verbindungsmittel in Betracht. Dabei wird die Verbindung derart ausgeführt, daß die Türme 61 und 62 in X-Richtung in festem Abstand zueinander angeordnet bleiben.

In Fig. 2 befindet sich der Rahmen 4 mit den Führungsträgern 41, 42 in vertikaler, der Z-Richtung entsprechender Position. Der Turm 61 mit dem von den Trägern 41, 42 entkoppelten Endstück 43 wird in Y-Richtung zurückgefahren, so daß der in langgestreckter U-Form verbleibende Rahmen 4 vor der geöffneten Stirn-Endseite vollkommen frei ist. Der umfangsseitig vollständig geschlossene Rumpf 9, der auf dem Bauteilwagen 13 ruht, wird durch Längsverfahren des Wagens 13 in Richtung-X mit seinem Mantel 91 zwischen die Rahmen-Führungsträger 41, 42 gebracht bzw. umgekehrt aus einer solchen Position herausgeführt. In der Draufsicht der Fig. 3 ist der Rahmen 4 in einer der X-Y-Ebene entsprechenden Horizontallage dargestellt. Man erkennt deutlich, daß der Turm 61 mit dem Endstück 43 soweit in Y-Richtung verfahren wird, daß der umfangsseitig geschlossene Rumpf 9 bequem frei über den inneren Werkzeug-Führungsträger 41 bewegbar ist.

Um nach einem Herausfahren des Rumpfes 9 aus dem Bereich des Rahmens 4 die Höhenebene für den inneren Werkzeug-Führungsträger 41 zu ändern, werden die beiden Endstück-Lager 511 an den Türmen 61, 62 in gleichem gewünschtem Maß in Richtung Z in der Höhe verfahren und positioniert. Dabei bleibt die Drehposition des Endstücks 43 und des offenen U-Rahmenteils um die Drehachsen der Lager 511 erhalten, so daß der Rahmen 4 auf einfache Weise wieder dadurch geschlossen wird, daß der Turm 61 in mit dem Turm 62 übereinstimmende Y-Position zurückgefahren wird.

Im Ausführungsbeispiel der Fig. 1 bis 6 ist das in Z-Richtung höhenverfahrbare Drehlager 511 an dem Turm 62 mit einer Gewichtmasse 45 derart verbunden, daß ein das Gewicht des U-Rahmenteils ausgleichendes Gegengewicht wirkt, um den U-Rahmenteil mit günstiger Kraftverteilung am Lager des Turmes 62 in seiner freitragenden Position zu halten.

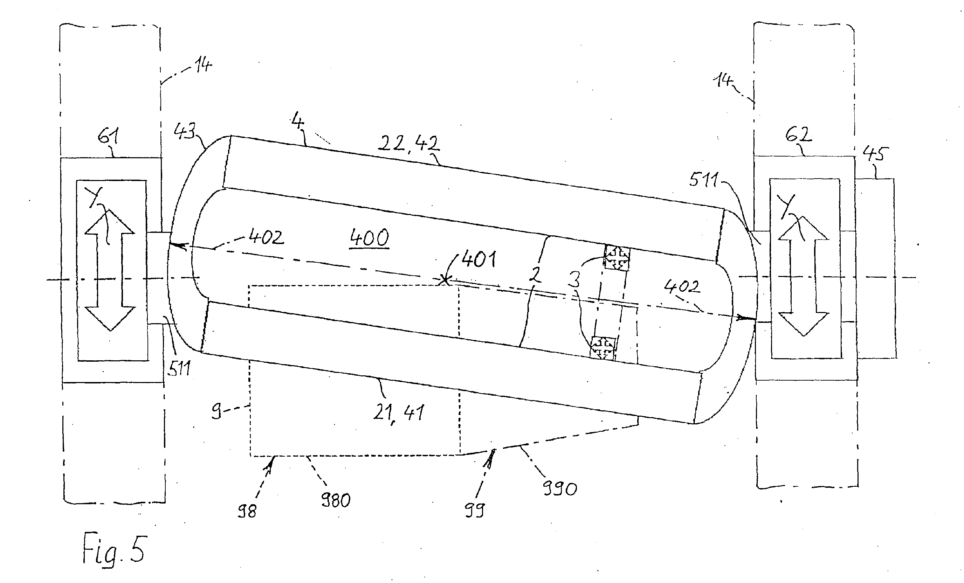

Wie aus der Draufsicht der Fig. 5 ersichtlich, sind die parallelen Werkzeug-Führungsträger 41, 42 des Rahmens 4 in einer Richtung ausgerichtet, die der Längskontur 990 eines konischen Endabschnitts 99 eines Rumpfes 9 entspricht. Das heißt, daß die Führungsträger 41, 42 und die gerade Konturlinie des konischen Abschnittes 99, dessen Kreisdurchmesser zum Ende hin kleiner wird, parallel gerichtet sind. Man erreicht, daß mit der Montageeinrichtung 11 nicht nur Längsnähte an einem geraden Rumpfabschnitt 98 mit parallel zur X-Richtung liegender Kontur 980, sondern auch an einem unter einem Winkel zur X-Richtung liegenden dreidimensionalen räumlichen Abschnitt hergestellt und bearbeitet werden. Zu diesem Zweck ist der ebene Trägerrahmen 4 in einer sämtlichen Teilen 41 bis 44 gemeinsamen Rahmenebene 400 um eine zu dieser senkrechte Mittelachse 401 drehverstellbar angeordnet.

Die Rahmenebene 400 kommt, abhängig von übereinstimmenden Höhenpositionen der Lager 511 in Z-Richtung, in horizontalen Ebenen zu liegen. Jedes Endstück 43, 44 ist an seiner dem Lager 511 zugewandten Seite mit einem konvexen Kreisabschnitt ausgebildet, der durch einen in der Fläche 400 liegenden Radius 402 um die Achse 401 bestimmt ist. Entsprechend ist jedes Lager 511 mit konvexer angepaßter Lagerschale versehen, um das zugehörige Endstück 43, 44 in der Ebene 400 um die Achse 401 dreh-verschwenkbar aufzunehmen.

Zum Einrichten der an die gerade Schrägkontur angepaßten Position der Träger 41, 42 wird der Rahmen 4 zunächst mit zur X-Richtung paralleler Ausrichtung mit den Türmen 61, 62 in Y-Richtung linear verfahren und mit den senkrecht dazu in Z-Richtung linear verfahrbaren Lagern 511 in die gewünschte Umfangs- und Höhenposition gebracht. Durch Drehung um die Drehachse 500 werden die Werkzeugwagen 310, 320 in der eingestellten Umfangsposition in 90°-Arbeitsstellung zur Wand des Zylinderabschnitts 98 gebracht. Durch Drehung des Rahmens 4 um die Achse 401 erfolgt dann die Parallelausrichtung zur Kontur 990 des Konusabschnitts 99.

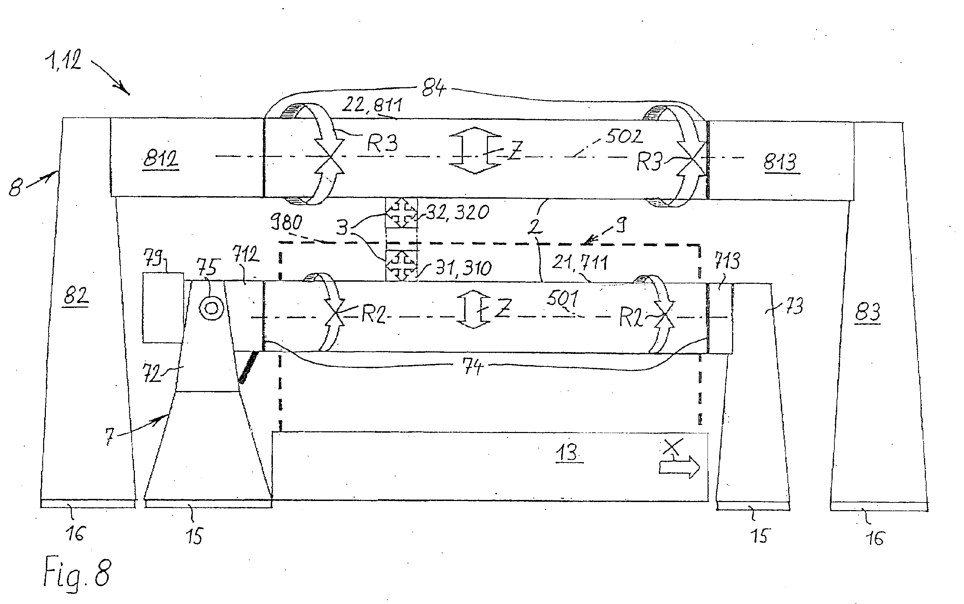

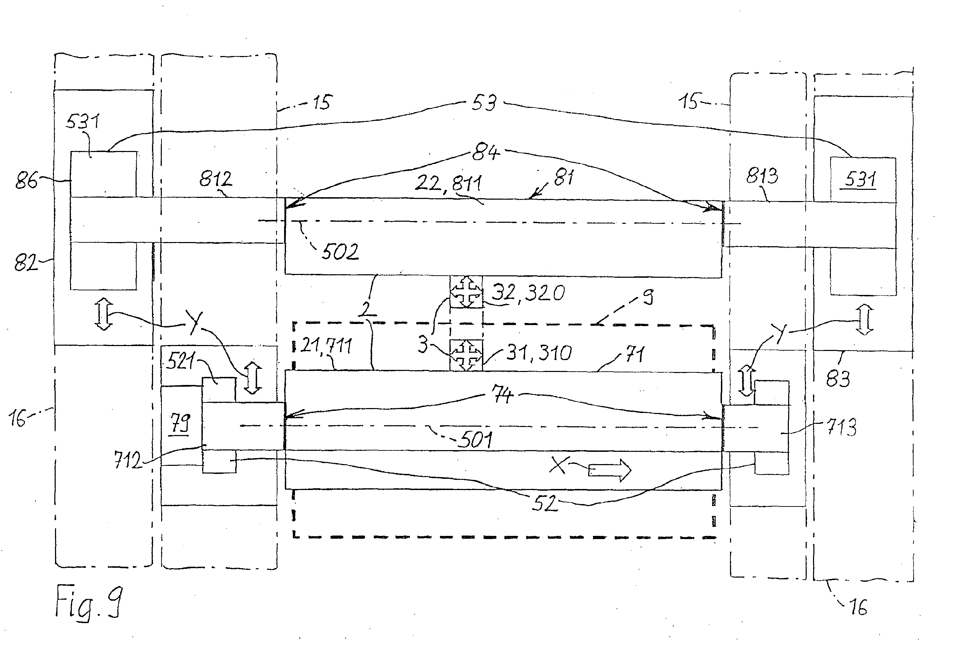

Die Beschreibung der Montageeinrichtung der Fig. 8 bis 13 kann dem Verständnis der Erfindung dienen, die Montageeinrichtung der Fig. 8 bis 13 fällt aber nicht unter den Schutzbereich des Anspruchs 1.

Gemäß Fig. 8 bis 13 umfaßt eine Montageeinrichtung 1,12 anstelle des Trägerrahmens 4 eine innere Portaleinrichtung 7, die einen inneren Werkzeug-Führungsträger 21 lagert, sowie eine äußere Portaleinrichtung 8, die einen äußeren Werkzeug-Führungsträger 22 lagert. Die innere Portaleinrichtung 7 weist zwei durch Türme 72, 73 gebildete säulenartige Gestellteile auf, die einen Portalträger 71 in Höhenrichtung Z verfahrbar und einstellbar lagern. Der Portalträger 71 ist durch einen den Führungsträger 21 bildenden inneren Längsabschnitt 711 sowie endseitig durch Lagerabschnitte 712, 713 gebildet, wobei der Längsabschnitt 711 mittels Drehkranz-Lager 74 um eine Dreh-Längsachse 501 drehbar an den Lagerabschnitten 712 und 713 gelagert ist.

Die äußere Portaleinrichtung 8 ist entsprechend ausgebildet. Sie weist zwei Türme 82, 83 bildende Gestellteile auf, an denen ein Portalträger 81 in Höhenrichtung Z verfahrbar und einstellbar gelagert ist. Der Portalträger 81 ist durch einen inneren, den äußeren Führungsträger 22 bildenden Längsabschnitt 811 sowie Lagerabschnitte 812, 813 an seinen Enden gebildet. Der mittlere Längsabschnitt 811 ist mittels Drehkranz-Lager 84 um eine Längs-Drehachse 502 drehbar an den Endabschnitten 812, 813 gelagert. Die Portaleinrichtungen 7, 8 sind auf Schienen 15 bzw. 16 in Y-Richtung separat verfahrbar.

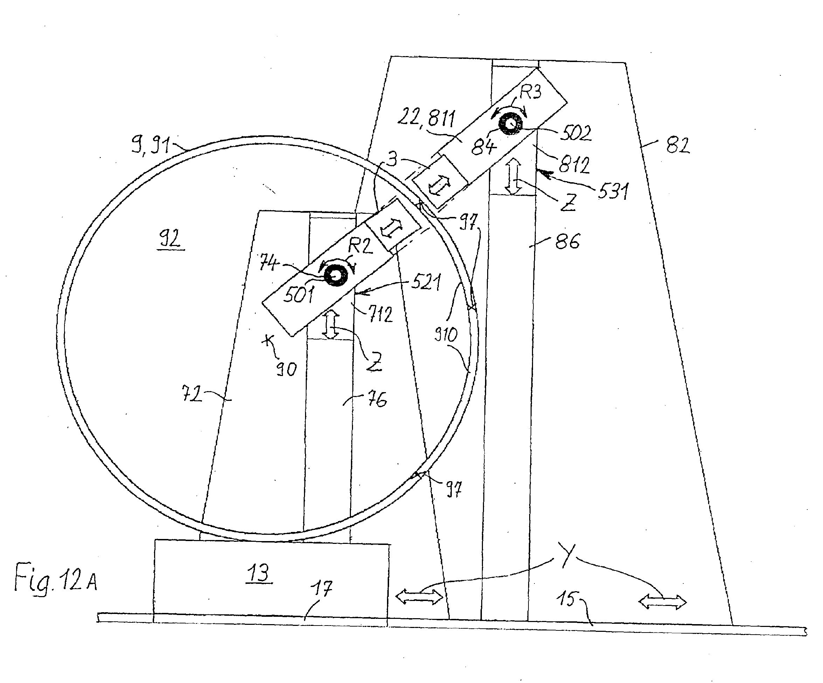

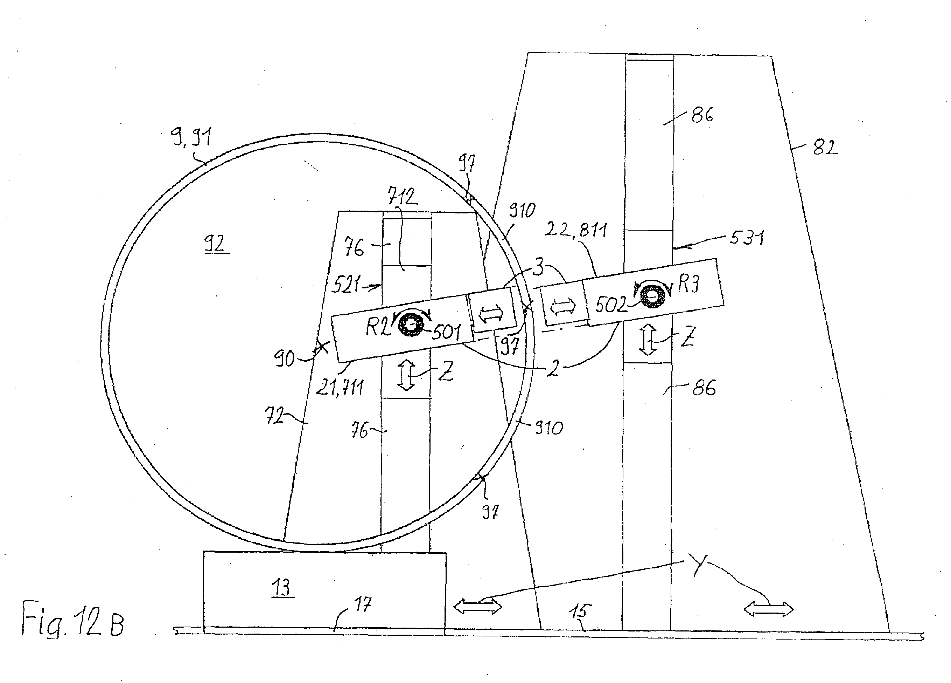

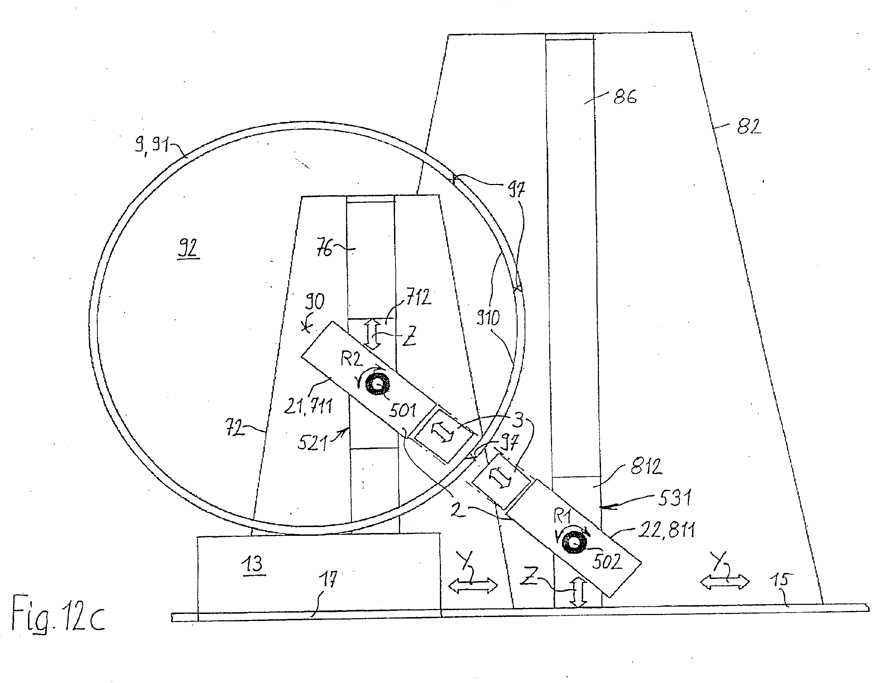

Abgesehen davon, daß in der Montageeinrichtung der Fig. 8 bis 13 die mittleren Portal-Längsabschnitte 711, 811 die mit gerader Längskontur 980 parallelen Führungsträger 21, 22 bilden, bilden diese mit Werkzeugwagen 310, 320 und Werkzeugen 31, 32 ein Werkzeug-Führungsträgerpaar 2 wie in dem zuvor beschriebenen Ausführungsbeispiel. Zum Herstellen von Nietnähten 97 können zum Beispiel die aus Fig. 12A bis 12C hervorgehenden Positionen erreicht und eingestellt werden, die den Positionen in Fig. 6A bis 6C entsprechen. Um eine Arbeitsposition zum Bearbeiten einer Naht 97 einzurichten, werden die Turmpaare 72, 73 und 82, 83 in Y-Richtung separat verfahren und in für die gewünschte Position geeigneten Abstand gebracht. Die Portalträger 71, 81 werden durch lineare Stellbewegung in Z-Richtung in Höhenpositionen gebracht, in denen dann die die Längs-Führungsträger 21, 22 bildenden Längsabschnitte 711, 811 durch Drehbewegung um die Achsen 501, 502 in Richtungen R2, R3 verschwenkt werden, um die Werkzeugwagen 310, 320 mit den Werkzeugen 31, 32 im Paar 3 in einheitlicher Arbeitsrichtung unter einem Winkel von 90° zur zu bearbeitenden Mantelfläche gegeneinander auszurichten.

Die Portalträger-Lagerabschnitte 712, 713 bzw. 812, 813 werden in Lagern 521 bzw. 531 gehalten, die an den Türmen 72, 73 bzw. 82, 83 in vertikalen Lagernuten 712 bzw. 812 in Höhenrichtung Z zum Beispiel mit nicht dargestellten Gewindespindeln verfahrbar und feststellbar sind.

Die Werkzeugwagen 310, 320 können in einem Umfangsbereich von ca. 270° in Arbeitsposition gebracht werden, wobei lediglich der Bereich des den Rumpf 9 lagernden Bauteilwagens 13 ausgespart bleibt. Zum Beispiel lassen sich sämtliche Positionen an den in Größe und Form unterschiedlichen Rümpfen in Fig. 7 einstellen.

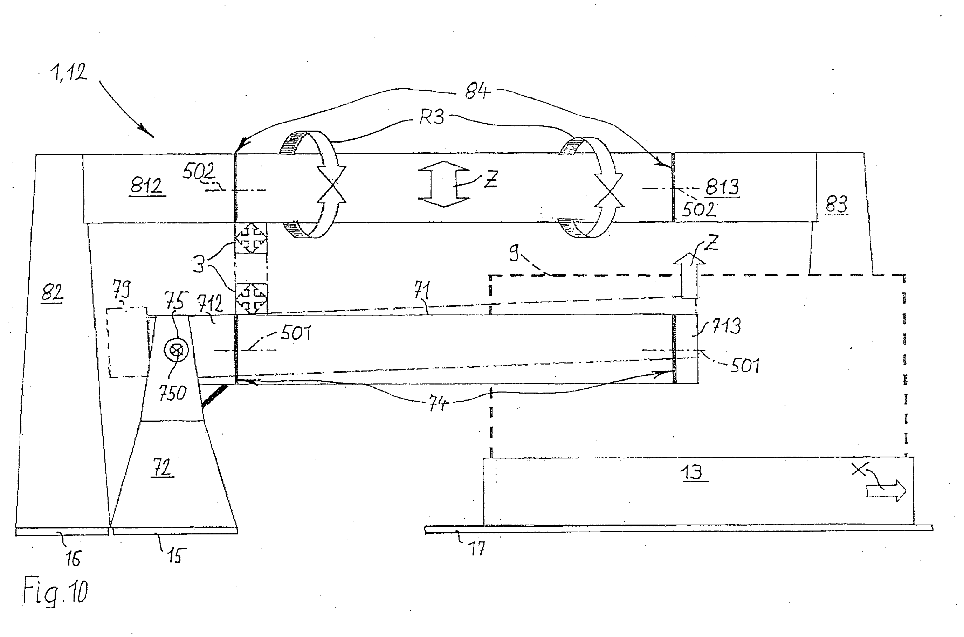

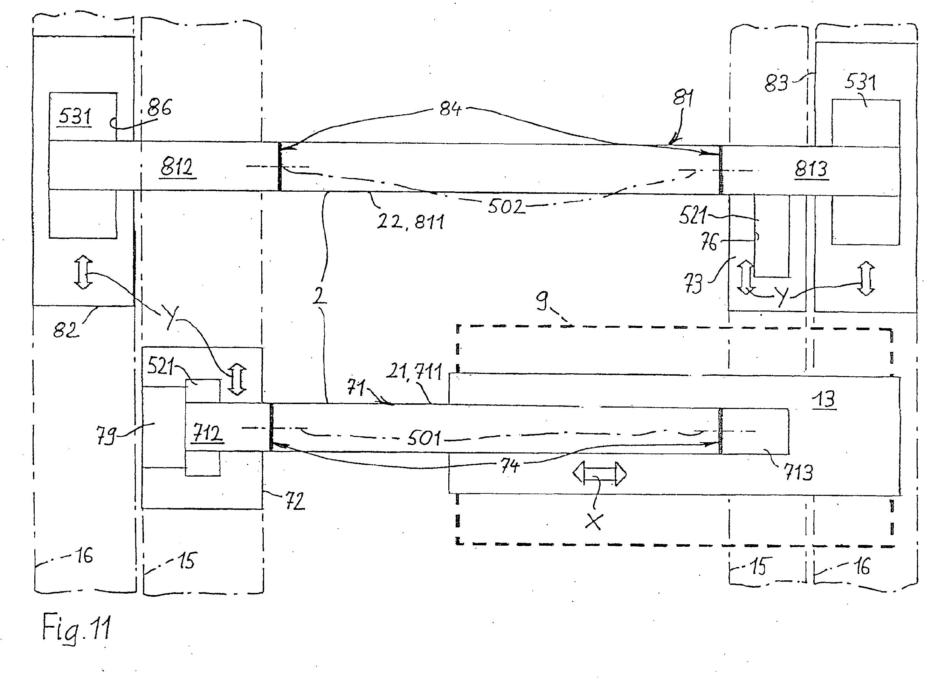

In Fig. 10 und 11 sind Gestaltungen der Montageeinrichtung 12 dargestellt, um die umfangsseitig vollkommen geschlossenen Rumpf-Mantelkörper 9 in die Einrichtung hineinzubringen und daraus zu entnehmen, insbesondere auch verbunden mit dem Aus- und Einfahren eines Rumpfes zum Durchführen eines Werkzeug-Ebenenwechsels zwischen durch Böden 93, 94, 95 getrennten Flurbereichen.

Die innere Portaleinrichrung 7 weist den als Hauptturm vorgesehenen Turm 72 auf. An diesem ist der Portalträger 71 mit Schwenklager 75 um eine in Y-Richtung sich erstreckende Achse 750 schwenkbar gelagert. So wird das den Portalträger 71 lagernde Drehlager 521 drehbewegbar um die Achse 750 ausgebildet, wobei die Höhenverstellbarkeit des Lagers 521 am Turm 72 erhalten bleibt.

An seinem anderen Ende ist der Portalbalken 71 mit dem einen Auflageturm bildenden Turm 73 verbunden. Um den stirnseitigen Raum vor dem Portalträger 71 freizugeben, wird der zum Abheben an dem Turm 73 aufliegende Portalträger 71 um wenige Grad, z. B. ca. 5° durch Verschwenken um die Achse 750 in Z-Richtung angehoben. Wie aus Fig. 11 ersichtlich, wird der freigegebene Auflageturm 73 in Y-Richtung in eine hintere Position verfahren. Der innere Portalträger 71 liegt infolgedessen zum Einbringen und Entnehmen eines Rumpfes 9 frei. Zum Ebenenwechsel wird der freiragende Portalträger 71 durch Verfahren des Hauptturmes 72 in Y-Richtung und Verfahren des Lagers 521 an diesem Turm in Z-Richtung in die gewünschte Höhenposition gebracht. Entsprechend wird das Dreh-Auflager 521 für den Portalträger 71 am Auflageturm 73 in die gleiche Höhenposition gefahren, um zum Schließen der Brücke 7 in die dem Turm 72 entsprechende Y-Position gefahren zu werden.

Das Lager 521 am Hauptturm 72 ist mit einer Gewichtsmasse 79 versehen, die ein dem Hebelgewicht des Portalträgers 71 entgegenwirkende Hebelgewicht erzeugt, um den Portalträger 71 in seiner mit geringfügigem Schwenkwinkel hochgeschwenkten Position zu halten, wie dies in Fig. 10 dargestellt ist.

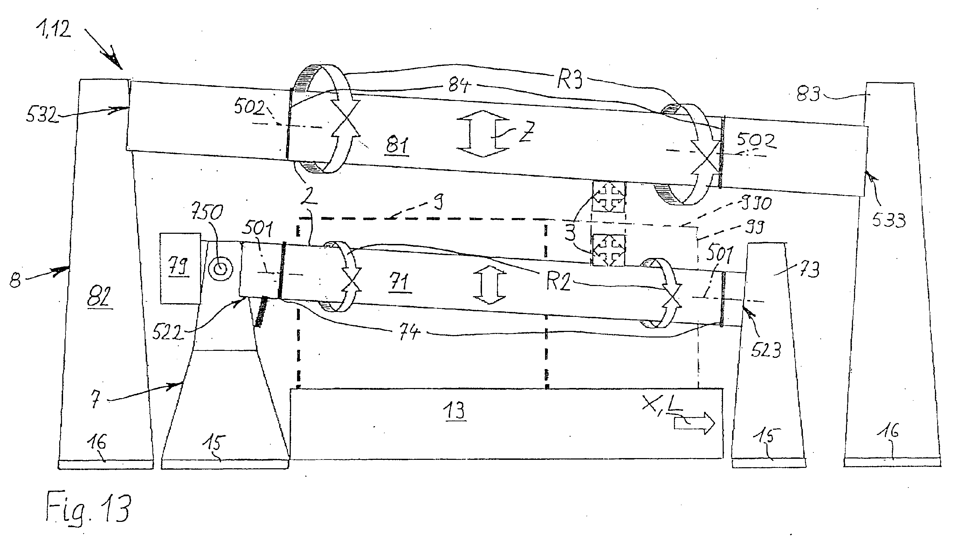

Die die Portaleinrichtungen 7, 8 aufweisende Montageeinrichtung 12 kann zweckmäßig, wie dies in der Montageeinrichtung der Fig. 13 dargestellt ist, mit zur X-Y-Ebene schräg lagerbaren, parallel ausgerichteten Portalträgem 71, 81 ausgestattet werden, um Längsnahtbearbeitungen auch an zur X-Richtung schräg verlaufender Kontur 990 zum Beispiel eines Konusabschnittes 99 durchzuführen. Zu diesem Zweck kann das Schwenklager 75 der inneren Portaleinrichtung 7 genutzt werden, wobei der Schwenkbereich entsprechend groß vorgesehen wird. Entsprechend wird der äußere Portalträger 81 an seinem Turm 82 mittels eines Festlagers gelagert, das einstellbar eine in Z-Richtung gekippte Trägerposition zuläßt. An dem anderen Turm 83 wird, wie an dem Turm 73 für das Lager 531, ein Auflager bzw. ein Loslager vorgesehen, um die Schrägposition verstellbar einrichten zu können.

Sämtliche Abläufe werden automatisch nach Vorgabe des vorgefertigten, zu bearbeitenden Rumpfes mittels üblicher Maschinensteuerung gesteuert.

## Patentansprüche

1. Montageeinrichtung (12) zum Verbinden von schalenförmigen Mantel-Längssegmenten (910) eines ein Großbauteil bildenden, sich lang erstreckenden, einen Hohlraum (92) mit offener Stirnseite bestimmenden, insbesondere umfangsseitig geschlossenen Mantelkörpers (9) durch Anbringen wenigstens einer Längs-Verbindungsnaht (97) am Körpermantel (91), umfassend
wenigstens ein Werkzeugpaar (3), das ein in Längsrichtung (L) des Mantelkörpers (9) innerhalb des Hohlraums (92) verfahrbar geführtes inneres Werkzeug (31) sowie ein in Längsrichtung (L) des Mantelkörpers (9) außerhalb des Hohlraums (92) verfahrbar geführtes äußeres Werkzeug (32) aufweist, wobei
die Werkzeuge (31, 32) im Paar (3) in Richtung quer zur Körperlängsrichtung (L) zum Herstellen der Verbindungsnaht (97) zusammenzuwirken, wobei die Montageeinrichtung (1) ein Trägerpaar (2) umfaßt, das durch einen im Hohlraum (92) des Mantelkörpers (9) sich in Körperlängsrichtung (L) erstreckenden, das innere Werkzeug (31) verfahrbar führenden inneren Führungsträger (21) sowie durch einen außerhalb des Mantelkörpers (9) sich in Körperlängsrichtung (L) erstreckenden, das äußere Werkzeug (32) verfahrbar führenden äußeren Führungsträger (22) gebildet ist, wobei
jeder Führungsträger (21, 22) um wenigstens eine nach Maßgabe äußerer Längskontur (980, 990) des Mantelkörpers (9) orientierte Längs-Drehachse (500) rotatorisch sowie in wenigstens zwei separate, quer zur Körperlängsrichtung (L) verlaufende Raumrichtungen (Y, Z) verschiebbar derart gelagert und feststellbar ist, daß die zum Herstellen der Verbindungsnaht (97) zusammenwirkenden Werkzeuge (31, 32) im Paar (3) wahlweise unterschiedliche Positionen am Längsumfang des Mantelkörpers (9) einnehmen können, wobei
die Montageeinrichtung (11) einen sich in Längsrichtung (L) erstreckenden Trägerrahmen (4) umfaßt, der das Trägerpaar (2) bildet und um eine vorzugsweise mit einer Symmetrie-Längsachse (40) des Trägerrahmens (4) zusammenfallende Lagerachse rotatorisch gelagert ist, die eine gemeinsame Längs-Drehachse (500) für die beiden Führungsträger (21, 22) bildet, und wobei
der Trägerrahmen (4) an seinen stirnseitigen Enden die beiden Führungsträger (21, 22; 41, 42) eines Trägerpaares (2) verbindende Rahmenstege (43, 44) aufweist, die um wenigstens eine Längsachse (40) des Trägerrahmens (4) drehbar gelagert sind, **dadurch gekennzeichnet, dass** an wenigstens einem Rahmenende der Rahmensteg (43) lösbar mit den Rahmen-Führungsträgem (41, 42) verbunden und im gelösten Zustand in eine stirnseitigen Raum vor dem inneren Führungsträger (41) freigebende Position bewegbar ist.

2. Montageeinrichtung nach Anspruch 1, wobei wenigstens ein Werkzeugpaar (3) zum Herstellen einer Nietverbindung ausgebildet ist.

3. Montageeinrichtung nach Anspruch 2, wobei das Werkzeugpaar (3) Nietwerkzeuge (31, 32) umfaßt, die frei von Krafteinleitung in den Mantelkörper (9) Niete setzen.

4. Montageeinrichtung nach einem der Ansprüche 1 bis 3, wobei die Montageeinrichtung (1) zum Anbringen wenigstens einer Längs-Verbindungsnaht (97) für die Herstellung eines Mantelkörpers (9) ausgebildet ist, der wenigstens über einen Längsabschnitt (98) zumindest annähernd zylindrische Form aufweist.

5. Montageeinrichtung nach einem der Ansprüche 1 bis 4, wobei die Einrichtung zum Anbringen wenigstens einer Längs-Verbindungsnaht (97) für die Herstellung eines Mantelkörpers (9) ausgebildet ist, der wenigstens über einen Längsabschnitt (99), insbesondere einen Endabschnitt, konisch ist.

6. Montageeinrichtung nach einem der Ansprüche 1 bis 5, wobei jeder Werkzeug-Führungsträger (31, 32) rotatorisch um zugehörige Längs-Drehachse (500) und translatorisch in zwei separate, senkrecht zueinanderstehende transversale Richtungen (Y, Z) verlagerbar ist, wobei vorzugsweise die eine transversale Richtung (Y) durch eine horizontale Ebene (X-Y) und die andere durch dazu senkrechte Vertikalrichtung (Z) bestimmt sind.

7. Montageeinrichtung nach einem der Ansprüche 1 bis 6, wobei der Trägerrahmen (4) an dem stirnseitigen Ende, das einem mit vollständig abtrennbarem Rahmensteg (43) ausgestatteten stirnseitigen Rahmenende gegenüberliegt, mit einer Gewichtsmasse (45) versehen ist, die ein Ausgleichsgewicht erzeugt, um den Trägerrahmen (4) im Zustand des vollständig von den Rahmen-Führungsträgern (41, 42) abgetrennten Rahmensteges (43) in Position zu halten.

8. Montageeinrichtung nach einem der Ansprüche 1 bis 7, wobei der Trägerrahmen (4) derart gelagert ist, daß er wahlweise in wenigstens zwei Positionen (19) versetzbar ist, in denen die Rahmen-Führungsträger (41, 42) jeweils entsprechend unterschiedlicher äußerer Längskontur (980, 990) des Mantelkörpers (9) ausgerichtet sind.

9. Montageeinrichtung nach Anspruch 8, wobei die Montageeinrichtung (11) eine den Trägerrahmen (4) lagernde Lagereinrichtung (51) umfaßt, die an den Rahmenstegen (43, 44) in deren Erstreckungsrichtung gekrümmt ausgebildete Lagerabschnitte sowie diese aufnehmende korrespondierende Lagerabschnitte aufweist.

10. Montageeinrichtung nach einem der Ansprüche 1 bis 9, wobei die Montageeinrichtung (11) säulenartige Gestellteile (61, 62) umfaßt, zwischen denen der Trägerrahmen (4) angeordnet und an denen er um eine Längsachse (40) drehbar gelagert ist, wobei die säulenartigen Gestellteile (61, 62) in wenigstens einer ersten Raumrichtung (Y) quer zur Längsrichtung (L) des Mantelkörpers (9) gemeinsam verfahrbar und feststellbar angeordnet sind.

11. Montageeinrichtung nach Anspruch 10, wobei die säulenartigen Gestellteile (61, 62) Drehlager (511) tragen, die den Rahmenträger (4) lagern und in Raumrichtung (Z) quer zur Längsrichtung (L) des Mantelkörpers (9) in der Säulenhöhe der Gestellteile (61, 62) verstellbar sind.

## Claims

1. An installation device (12) for connecting shell-shaped longitudinal segments (910) of a jacket body (9) that forms a large component that extends longitudinally, that determines a hollow space (92) with an open face, and that is closed in particular on the circumferential side, by placement of at least one longitudinal connection seam (97) on the body jacket (91), comprising
at least one tool pair (3) which comprises an inner tool (31) that is movably guided within the hollow space (92) in longitudinal direction (L) of the jacket body (9), and further comprises an outer tool (32) that is movably guided outside the hollow space (92) in longitudinal direction (L) of the jacket body (9),
wherein for the purpose of producing the connection seam (97) the tools (31, 32) are adapted to act together as a pair (3) in the direction perpendicular to the longitudinal direction (L) of the body,
wherein the installation device (1) comprises a carrier pair (2) which is formed by an inner guide carrier (21) that extends in longitudinal direction (L) of the body and movably guides the inner tool (31) within the hollow space (92) of the jacket body (9), and further comprises an outer guide carrier (22) that extends outside the jacket body (9) in longitudinal direction (L) of the body and movably guides the outer tool (32), wherein each guide carrier (21, 22) is rotatably held according to at least one longitudinal rotary axis (500) oriented by an outer longitudinal contour (980, 990) of the jacket body (9), as well as being slidably held and fastenable in at least two separate spatial directions (Y, Z) that extend perpendicular to the longitudinal direction (L) of the body,
wherein the tools (31, 32), which interact for producing the connection seam (97) selectively are adapted for taking up different positions on the longitudinal circumference of the jacket body (9) as a pair,
wherein the installation device (11) comprises a carrier frame (4) that extends in longitudinal direction (L), which carrier frame (4) forms the carrier pair (2) and is rotatably held on a bearing axis that preferably coincides with a longitudinal symmetry
axis (40) of the carrier frame (4), which axis forms a mutual longitudinal rotary axis (500) for the two guide carriers (21, 22), and
wherein the carrier frame (4) at its faces comprises the frame webs (43, 44) that are adapted to connect the two guide carriers (21, 22; 41, 42) of a carrier pair (2), which frame webs (43, 44) are rotatably held by at least one longitudinal axis (40) of the carrier frame (4), **characterized in that**
on at least one frame end the frame web (43) is detachably connected to the frame guide carriers (41, 42) and that said frame web (43) in the detached state is movable to a position that provides access to a front space in front of the inner guide carrier (41).

2. The installation device of claim 1,
wherein at least one tool pair (3) is adapted for establishing a riveted connection.

3. The installation device of claim 2,
wherein the tool pair (3) comprises riveting tools (31, 32) that are adapted to place rivets into the jacket body (9) free of any force introduction.

4. The installation device of any one of claims 1 to 3,
wherein the installation device (1) for the placement of at least one longitudinal connection seam (97) is adapted for manufacturing a jacket body (9) which at least along one longitudinal section (98) is at least approximately cylindrical in shape.

5. The installation device of any one of claims 1 to 4,
wherein the device for the placement of at least one longitudinal connection seam (97) is adapted for manufacturing a jacket body (9), which is conical at least along one longitudinal section (99), in particular an end section.

6. The installation device of any one of claims 1 to 5,
wherein each tool guide carrier (31, 32) is rotatably displaceable on associated longitudinal rotary axes (500) and is translative displaceable to and fro manner in two separate transverse directions (Y, Z) that are perpendicular in relation to each other, wherein preferably one transverse direction (Y) is determined by a horizontal plane (X-Y) while the other transverse plane is determined by a vertical direction (Z) that is perpendicular in relation to the aforementioned plane.

7. The installation device of any one of claims 1 to 6,
wherein the carrier frame is, at its end that faces a frame end that comprises a fully detachable frame web (43), provided with a weight mass (45) that is adapted to generate a counterbalance weight so as to hold the carrier frame (4) in position in the state where the frame web (43) is completely separated from the frame guide carriers (41,42).

8. The installation device of any one of claims 1 to 7,
wherein the carrier frame (4) is held such that it is relocatable as desired to at least two positions (19) in which each of the frame guide carriers (41, 42) is aligned according to a different outer longitudinal contour (980, 990) of the jacket body (9).

9. The installation device of claim 8,
wherein the installation device (11) comprises a bearing device (51) that holds the carrier frame (4), which bearing device (51) on the frame webs (43, 44) in their direction of extension comprises curved bearing sections, as well as corresponding bearing sections that accommodate said curved bearing sections.

10. The installation device of any one of claims 1 to 9,
wherein the installation device (11) comprises column-like mounting parts (61, 62) between which the carrier frame (4) is arranged and on which it is held so as to be rotatable on a longitudinal axis (40), wherein the column-like mounting parts (61, 62) in at least a first spatial direction (Y) perpendicular to the longitudinal direction (L) of the jacket body (9) are arranged so as to be mutually movable and fastenable.

11. The installation device of claim 10,
wherein the column-like mounting parts (61, 62) carry rotary bearings (511) that hold the frame carrier (4) and that are adjustable in the spatial direction (Z) perpendicular to the longitudinal direction (L) of the jacket body (9) in the column height of the mounting parts (61, 62).

## Revendications

1. Dispositif de montage (12) destiné à l'assemblage de segments longitudinaux d'enveloppe en forme de coques (910) d'un corps d'enveloppe (9) en particulier fermé du côté périphérique, formant un élément principal, s'étendant en longueur et définissant un espace creux (92) avec un côté frontal ouvert, par la pose d'au moins un joint d'assemblage longitudinal (97) sur l'enveloppe de corps (91), comprenant
au moins une paire d'outils (3), qui présente un outil intérieur (31), guidé mobile dans la direction longitudinale (L) du corps d'enveloppe (9) à l'intérieur de l'espace creux (92), ainsi qu'un outil extérieur (32), guidé mobile dans la direction longitudinale (L) du corps d'enveloppe (9) à l'extérieur de l'espace creux (92),
les outils (31, 32) de la paire (3) coopérant dans la direction transversale à la direction longitudinale (L) du corps pour créer le joint d'assemblage (97),
le dispositif de montage (1) comportant une paire de supports (2), formée par un support de guidage intérieur (21) s'étendant dans l'espace creux (92) du corps d'enveloppe (9) dans la direction longitudinale (L) du corps et guidant mobile l'outil intérieur (31), et par un support de guidage extérieur (22), s'étendant à l'extérieur du corps d'enveloppe (9) dans la direction longitudinale (L) du corps et guidant mobile l'outil extérieur (32),
chaque support de guidage (21, 22) étant monté en rotation autour d'au moins un axe de rotation longitudinal (500), orienté selon le contour longitudinal extérieur (980, 990) du corps d'enveloppe (9), et avec une possibilité de déplacement dans au moins deux directions spatiales (Y, Z) séparées, s'étendant transversalement à la direction longitudinale (L) du corps, et pouvant être bloqué de telle sorte que les outils (31, 32) de la paire (3), coopérant pour créer le joint d'assemblage (97), peuvent occuper sélectivement différentes positions sur le pourtour longitudinal du corps d'enveloppe (9),
le dispositif de montage (11) comportant un cadre support (4), qui s'étend dans la direction longitudinale (L), forme la paire de supports (2) et est monté en rotation autour d'un axe de palier coïncidant de préférence avec un axe longitudinal de symétrie (40) du cadre support (4), lequel axe de palier forme un axe de rotation longitudinal commun (500) pour les deux supports de guidage (21, 22), et
le cadre support (4) présentant sur ses extrémités du côté frontal des traverses de cadre (43, 44), qui assemblent les deux supports de guidage (21, 22 ; 41, 42) d'une paire de supports (2) et sont montées tournantes autour d'au moins un axe longitudinal (40) du cadre support (4),
**caractérisé en ce que** la traverse de cadre (43) est assemblée de façon amovible avec les supports de guidage de cadre (41, 42) sur au moins une extrémité de cadre et peut être amenée, dans l'état de déblocage, dans une position dégageant l'espace du côté frontal devant le support de guidage intérieur (41).

2. Dispositif de montage suivant la revendication 1, dans lequel au moins une paire d'outils (3) est réalisée pour créer un joint riveté.

3. Dispositif de montage suivant la revendication 2, dans lequel la paire d'outils (3) comprend des outils de rivetage (31, 32), qui posent des rivets sans engagement de forces dans le corps d'enveloppe (9).

4. Dispositif de montage suivant l'une des revendications 1 à 3, dans lequel le dispositif de montage (1) est réalisé pour la pose d'au moins un joint d'assemblage longitudinal (97) destiné à créer un corps d'enveloppe (9), qui présente une forme au moins approximativement cylindrique au moins sur une section longitudinale (98).

5. Dispositif de montage suivant l'une des revendications 1 à 4, dans lequel le dispositif est réalisé pour la pose d'au moins un joint d'assemblage longitudinal (97) destiné à créer un corps d'enveloppe (9), qui est conique au moins sur une section longitudinale (99), en particulier une section extrême.

6. Dispositif de montage suivant l'une des revendications 1 à 5, dans lequel chaque support de guidage d'outils (31, 32) est déplaçable en rotation autour d'un axe de rotation longitudinal correspondant (500) et en translation dans deux directions transversales séparées (Y, Z), mutuellement perpendiculaires, l'une des directions transversales (Y) étant définie par un plan horizontal (X - Y) et l'autre par une direction verticale (Z) perpendiculaire à ce dernier.

7. Dispositif de montage suivant l'une des revendications 1 à 6, dans lequel le cadre support (4) est muni sur l'extrémité du côté frontal, en vis-à-vis d'une extrémité de cadre du côté frontal équipée d'une traverse de cadre (43) totalement séparable, d'une masse pondérale (45) qui génère un équilibrage de poids, pour maintenir le cadre support (4) en position, dans l'état de la traverse de cadre (43) totalement séparée des supports de guidage de cadre (41, 42).

8. Dispositif de montage suivant l'une des revendications 1 à 7, dans lequel le cadre support (4) est monté de telle sorte qu'il peut être déplacé sélectivement dans au moins deux positions (19), dans lesquelles les supports de guidage de cadre (41, 42) sont orientés respectivement suivant le contour longitudinal extérieur différent (980, 990) du corps d'enveloppe (9).

9. Dispositif de montage suivant la revendication 8, dans lequel le dispositif de montage (11) comprend un système de palier (51) supportant le cadre support (4), qui présente des sections de palier de réalisation cintrée sur les traverses de cadre (43, 44) dans la direction d'extension de ces dernières, ainsi que des sections de palier correspondantes recevant ces sections.

10. Dispositif de montage suivant l'une des revendications 1 à 9, dans lequel le dispositif de montage (11) comprend des parties de bâti (61, 62) en forme de colonne, entre lesquelles est disposé le cadre support (4) et sur lesquelles il est monté tournant autour d'un axe longitudinal (40), les parties de bâti (61, 62) étant disposées conjointement avec une possibilité de déplacement et de blocage dans au moins une première direction spatiale (Y) transversale à la direction longitudinale (L) du corps d'enveloppe (9).

11. Dispositif de montage suivant la revendication 10, dans lequel les parties de bâti (61, 62) en forme de colonne supportent des coussinets de pivotement (511), qui supportent le cadre support (4) et sont mobiles dans la direction spatiale (Z) transversale à la direction longitudinale (L) du corps d'enveloppe (9) à hauteur de colonne des parties de bâti (61, 62).
